Europäisches Patentamt

European Patent Office

Office européen des brevets

(19)

(11) Veröffentlichungsnummer: **0 163 182**
**A1**

(12) **EUROPÄISCHE PATENTANMELDUNG**

(21) Anmeldenummer: 85105777.8

(22) Anmeldetag: 10.05.85

(51) Int. Cl.⁴: **F 16 D 65/02**
F 16 D 55/02

(30) Priorität: 15.05.84 DE 8414833 U

(43) Veröffentlichungstag der Anmeldung:
04.12.85 Patentblatt 85/49

(84) Benannte Vertragsstaaten:
DE FR GB IT SE

(71) Anmelder: LUCAS INDUSTRIES public limited company
Great King Street
Birmingham, B19 2XF West Midlands(GB)

(72) Erfinder: Op den Camp, Eckart
Kemperhofweg 17
D-5400 Koblenz(DE)

(74) Vertreter: Wuesthoff, Franz, Dr.-Ing. et al,
Patentanwälte Wuesthoff -v. Pechmann-Behrens-Goetz
Schweigerstrasse 2
D-8000 München 90(DE)

(54) **Bremsbacke für Scheibenbremsen.**

(57) Die Bremsbacke hat eine Belaghalteplatte (10), die eine Vorderseite (12) und eine Rückseite (14) sowie einen Rand (16) mit einer durchgehenden Aussparung (18) aufweist. An der Vorderseite (12) der Belaghalteplatte (10) ist ein Reibbelag (20) befestigt. Die Rückseite (14) der Belaghalteplatte (10) ist von einer Dämpfungsscheibe (30) mindestens zu einem großen Teil abgedeckt. Durch die Aussparung (18) erstreckt sich der Nietschaft (44) eines Niets (40) hindurch, der einen Nietkopf (46) an der Vorderseite (12) der Belaghalteplatte (10) und einen Nietfuß (48) aufweist. Der Nietfuß (48) stützt sich über ein die Aussparung (28) überbrückendes Zwischenglied an der Rückseite (14) der Belaghalteplatte (10) ab. Die Bremsbacke hat ferner eine Niederhaltefeder (50) mit mindestens einer in der Aussparung (18) rings um den Nietschaft (44) angeordneten Federwindung (52). Das Zwischenglied ist ein mit einem Loch (38) versehener Bereich (36) der Dämpfungsscheibe (30) selbst, durch den sich der Nietschaft (44) hindurcherstreckt.

FIG. 2

EP 0 163 182 A1

PATENTANWÄLTE
WUESTHOFF - v. PECHMANN - BEHRENS - GOETZ
EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING. DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 5 24 070
TELEFAX: VIA (089) 2 71 60 63 (III)

EP-59 369
Lucas Industries p.l.c.

## Bremsbacke für Scheibenbremsen

Die Erfindung betrifft eine Bremsbacke für Scheibenbremsen mit

- einer Belaghalteplatte, die eine Vorderseite und eine Rückseite sowie einen Rand mit einer durchgehenden Aussparung aufweist,

- einem Reibbelag, der an der Vorderseite der Belaghalteplatte befestigt ist,

- einer Dämpfungsscheibe, welche die Rückseite der Belaghalteplatte mindestens zu einem großen Teil abdeckt,

- einem Niet mit einem Nietschaft, der sich durch die Aussparung hindurcherstreckt, einem Nietkopf an der Vorderseite der Belaghalteplatte und einem Nietfuß, der sich über ein die Aussparung überbrückendes Zwischenglied an der Rückseite der Belaghalteplatte abstützt, und

- einer Niederhaltefeder mit mindestens einer in der Aussparung rings um den Nietschaft angeordneten Federwindung.

Bei einer bekannten Bremsbacke dieser Gattung weist die Belagehalteplatte an ihrer Rückseite rings um die Aussparung eine Vertiefung auf, die den äußeren Rand einer ringförmigen Beilagscheibe aufnimmt. Der innere Rand der Beilagscheibe ist durch Verstemmen des Nietfußes am Nietschaft befestigt. Die Beilagscheibe bildet somit ein Zwischenglied, das den Zwischenraum zwischen Nietschaft und Belaghalteplatte überbrückt, den Niet in einer mit der Aussparung gleichachsigen Lage hält und dadurch auch die rings um den Nietschaft angeordnete Federwindung der Niederhaltefeder in ihrer vorgesehenen Stellung hält.

Solche Bremsbacken werden in der Praxis häufig mit einer Dämpfungsscheibe versehen, die nach Anbringung der Niederhaltefeder und Vernietung des Niets mit der Beilagscheibe auf die Rückseite der Belaghalteplatte aufgeklebt und nötigenfalls zusätzlich dadurch an der Belaghalteplatte befestigt wird, daß zwei vom Rand der Dämpfungsscheibe wegragende Laschen um je einen benachbarten Randabschnitt der Belaghalteplatte zu deren Vorderseite umgebogen werden.

Die Dämpfungsscheibe hat den Zweck, Quietschgeräusche beim Bremsen zu dämpfen und nach Möglichkeit ganz zu unterdrücken. Diesen Zweck kann die Dämpfungsscheibe in manchen Fällen schon dann erfüllen, wenn sie aus bloßem Stahlblech besteht; im allgemeinen ist die Dämpfungsscheibe jedoch mindestens an ihrer von der Belaghalteplatte abgewandten Seite mit einem gummiartigen Werkstoff beschichtet, der die Dämpfungswirkung verbessert.

Solche Bremsbacken mit Dämpfungsscheibe haben sich im allgemeinen gut bewährt; die beschriebene Verklebung und zusätzliche mechanische Befestigung der Dämpfungsscheibe an der Belaghalteplatte hat sich unter dem Gesichtspunkt der Sicherheit als ausreichend erwiesen, und die Geräuschentwicklung beim Bremsen ist in nahezu allen Fällen erheblich geringer als bei vergleichbaren Bremsbacken ohne Dämpfungsscheibe.

Ein bisher unbeachteter Nachteil der bekannten Anordnung kann jedoch daraus entstehen, daß die Dämpfungsscheibe bei starker Erhitzung infolge einer kräftigen Bremsung dazu neigt, sich in ihrem mittleren Bereich zu wölben und dann wie eine Feder zu wirken, die bestrebt ist, die Bremsbacke von dem ihr zugeordneten Betätigungsglied weg gegen die Bremsscheibe zu drücken. Infolgedessen kann es vorkommen, daß eine mit solchen bekannten Bremsbacken ausgerüstete Scheibenbremse nach einer kräftigen Betätigung ein Restschleifmoment aufweist, das nicht hingenommen werden kann und dazu zwingt, das Bremslüftspiel größer zu halten als normalerweise nötig und mit Rücksicht auf eine vollständige Ausnutzung des verfügbaren Bremspedalweges wünschenswert wäre.

Der Erfindung liegt deshalb die Aufgabe zugrunde, eine Bremsbacke der eingangs beschriebenen Gattung derart zu verbessern, daß die Dämpfungsscheibe wirksamer als bisher gehindert ist, sich in ihrem mittleren Bereich zu wölben.

Die Aufgabe ist erfindungsgemäß dadurch gelöst, daß ein mit einem Loch versehener Bereich der Dämpfungsscheibe selbst, durch den sich der Nietschaft hindurcherstreckt, das Zwischenglied bildet.

Auf diese Weise wird die bisher notwendige Beilagscheibe eingespart und die Dämpfungsscheibe durch den bisher nur zur Befestigung der Niederhaltefeder vorgesehenen Niet an der Belaghalteplatte befestigt. Es hat sich herausgestellt, daß dadurch Wölbungen der Dämpfungsscheibe in dem besonders kritischen mittleren Bereich zuverlässig vermieden werden können. Die Herstellkosten der Dämpfungsscheibe werden durch die Erfindung nicht erhöht, da das zum Vernieten erforderliche Loch beim Stanzen der Dämpfungsscheibe in einem Arbeitsgang hergestellt werden kann.

Die Dämpfungsscheibe kann nun schon vor der Montage der Niederhaltefeder an die Rückseite der Belaghalteplatte angelegt und vorzugsweise wie üblich durch Verkleben und zusätzlich mittels Laschen befestigt werden. Sodann wird die Niederhaltefeder mit ihrer Federwindung in die Aussparung der Belaghalteplatte eingelegt, der Nietschaft durch die Federwindung und das Loch in der Dämpfungsscheibe hindurchgesteckt, und schließlich wird der Nietfuß mit dem Bereich der Dämpfungsscheibe rings um das Loch vernietet. Diese Montageweise ist einfacher als die bisherige und hat den zusätzlichen Kostenvorteil, daß die Beilagscheibe eingespart wird.

Die Erfindung wird vorzugsweise bei solchen Bremsbacken angewandt, deren Belaghalteplatte in der beschriebenen bekannten Weise an ihrer Rückseite rings um die Aussparung vertieft ist. In diesem Fall ist der Bereich der Dämpfungsscheibe rings um das Loch erfindungsgemäß in entsprechender Weise vertieft.

Ein Ausführungsbeispiel der Erfindung wird im folgenden anhand schematischer Zeichnungen mit weiteren Einzelheiten erläutert. Es zeigt:

Fig.1     eine Seitenansicht einer Bremsbacke, von der nicht dargestellten, zugehörigen Bremsscheibe aus gesehen, und

Fig.2     den stark vergrößerten Schnitt II-II in Fig.1.

Die dargestellte Bremsbacke hat eine Belaghalteplatte 10 üblicher Form, die aus kräftigem Stahlblech gestanzt ist und an ihrer Vorderseite 12 sowie an ihrer Rückseite 14 im wesentlichen eben ist. Die Belaghalteplatte 10 hat einen kreisbogenförmigen oberen, in bezug auf die zugehörige Scheibenbremse radial äußeren Rand 16 mit einer ungefähr omegaförmigen, mittigen Aussparung 18.

Mit der Vorderseite 12 der Belaghalteplatte 10 ist ein Reibbelag 20 verklebt, der vorne eine Bremsfläche 22 und hinten Vorsprünge 24 aufweist, die in entsprechende Löcher der Belaghalteplatte 10 eingreifen. Der Reibbelag 20 hat einen kreisförmigen Rand 26, der in geringem Abstand radial innerhalb des Randes 16 der Belaghalteplatte 10 verläuft und durch eine ungefähr U-förmige mittige Aussparung 28 unterbrochen ist. Die U-förmige Aussparung 28 ist etwas größer als die omegaförmige Aussparung 18.

An der Rückseite 14 der Belaghalteplatte 10 ist eine Dämpfungsscheibe 30 festgeklebt und außerdem mit Laschen 32 befestigt, die um je einen seitlichen Randabschnitt der Belaghalteplatte 10 umgebogen sind. Die Dämpfungsscheibe 30 besteht aus Stahlblech mit einer Schicht 34 aus gummielastischem Werkstoff an der von der Belaghalteplatte 10 abgewandten Seite.

Die Aussparung 18 ist an der Rückseite 14 der Belaghalteplatte 10 teilweise durch einen vertieften Bereich 36 abgedeckt, der in einer entsprechenden rückseitigen Vertiefung der Belaghalteplatte 10 liegt und ein mit der Aussparung 18 gleichachsiges Loch 38 aufweist.

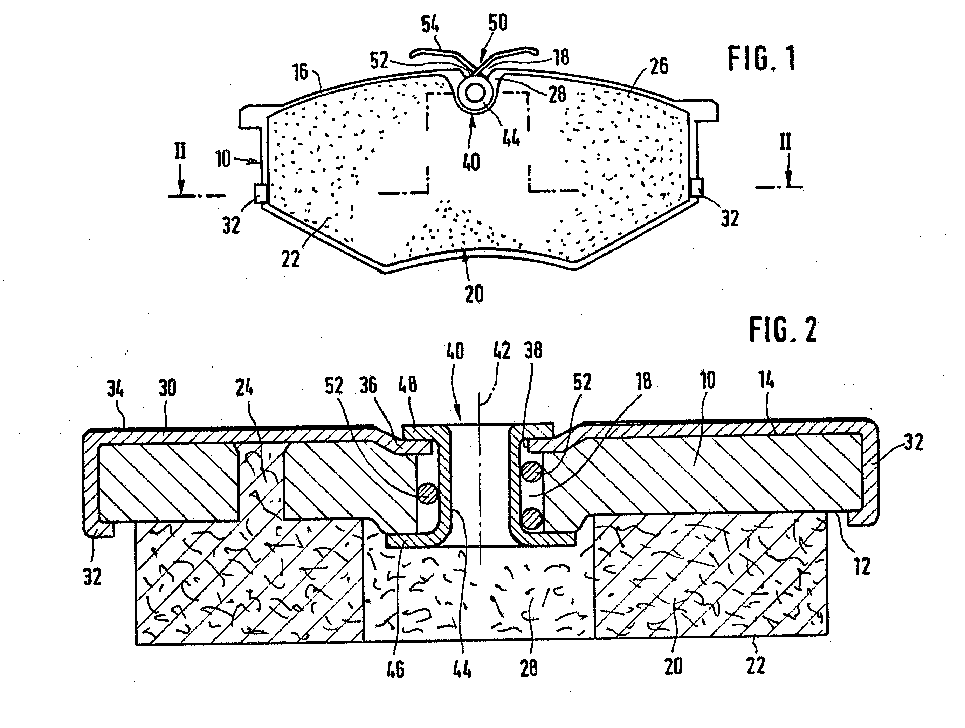

Belaghalteplatte 10 und Dämpfungsscheibe 30 sind durch einen hohlen Niet 40 zusammengehalten, dessen Achse 42 mindestens ungefähr in der gemäß Fig.1 senkrechten, in bezug auf die Scheibenbremse radialen Symmetrieebene der Bremsbacke liegt. Der Niet 40 hat einen Nietschaft 44, der sich durch die Aussparung 18 und das Loch 38 erstreckt, einen Nietkopf 46, der an einem erhabenen Bereich der Belaghalteplatte 10 anliegt, sowie einen Nietfuß 48, der im vertieften Bereich 36 der Dämpfungsscheibe 30 liegt.

0163182
59 369

Der Niet 40 dient zugleich zur Befestigung einer Niederhaltefeder 50, die einen in der Aussparung 18 der Belaghalteplatte 10 liegenden wendelförmigen mittleren Bereich
mit Federwindungen 52 sowie zwei aus der Aussparung 18
herausragende Federarme 54 aufweist. Der Nietschaft 44
erstreckt sich durch die Federwindungen 52 hindurch, die
ihn knapp zweimal, nämlich ungefähr um 630°, umschlingen.
Die Niederhaltefeder 50 ist somit durch den Niet 40 an
der Belaghalteplatte 10 zentriert und festgehalten.

5676

PATENTANWÄLTE

JESTHOFF - v. PECHMANN - BEHRENS - GOETZ

EUROPEAN PATENT ATTORNEYS

DI. ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING. DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 5 24 070
TELEFAX: VIA (089) 2 71 60 63 (III)

EP-59 369
Lucas Industries p.l.c.

P a t e n t a n s p r ü c h e

1. Bremsbacke für Scheibenbremsen mit
- einer Belaghalteplatte (10), die eine Vorderseite (12) und eine Rückseite (14) sowie einen Rand (16) mit einer durchgehenden Aussparung (18) aufweist,
- einem Reibbelag (20), der an der Vorderseite (12) der Belaghalteplatte (10) befestigt ist,
- einer Dämpfungsscheibe (30), welche die Rückseite (14) der Belaghalteplatte (10) mindestens zu einem großen Teil abdeckt,
- einem Niet (40) mit einem Nietschaft (44), der sich durch die Aussparung (18) hindurcherstreckt, einem Nietkopf (46) an der Vorderseite (12) der Belaghalteplatte (10) und einem Nietfuß (48), der sich über ein die Aussparung (28) überbrückendes Zwischenglied an der Rückseite (14) der Belaghalteplatte (10) abstützt, und
- einer Niederhaltefeder (50) mit mindestens einer in der Aussparung (18) rings um den Nietschaft (44) angeordneten Federwindung (52),
dadurch g e k e n n z e i c h n e t , daß ein mit einem Loch (38) versehener Bereich (36) der Dämpfungsscheibe (30) selbst, durch den sich der Nietschaft (44) hindurcherstreckt, das Zwischenglied bildet.

2. Bremsbacke nach Anspruch 1,
bei der die Belaghalteplatte (10) an ihrer Rückseite (14)
rings um die Aussparung (18) vertieft ist,
dadurch  g e k e n n z e i c h n e t , daß der Bereich
(36) der Dämpfungsscheibe (30) rings um das Loch (38) in
entsprechender Weise vertieft ist.

5676

EP-59 369
Lucas Industries p.l.c.

0163182

1/1

**FIG. 1**

**FIG. 2**

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 090 928  (LUCAS)  * Seite 2, Zeilen 47-116; Figuren 1-5 * | 1 | F 16 D  65/02  F 16 D. 55/02 |
| | --- | | |
| A | FR-A-2 265 009  (GENERAL MOTORS)  * Seite 2, Zeile 36 - Seite 3, Zeile 7; Figur 5 * | 1 | |
| | --- | | |
| A | EP-A-0 102 469  (KNORR-BREMSE) | | |
| | --- | | |
| A | DE-A-2 451 392  (FERODO) | | |
| | ----- | | |

| RECHERCHIERTE SACHGEBIETE (Int. Cl.4) |
|---|
| F 16 D  55/00  F 16 D  65/00 |

Der vorliegende Recherchenbericht wurde für alle Patentansprüche erstellt.

| Recherchenort DEN HAAG | Abschlußdatum der Recherche 08-08-1985 | Prüfer HARTEVELD C.D.H. |
|---|---|---|